**Europäisches Patentamt**

**European Patent Office**

**Office européen des brevets**

(11) Veröffentlichungsnummer: **0 217 139**
**A1**

## (12) EUROPÄISCHE PATENTANMELDUNG

(21) Anmeldenummer: 86111885.9

(22) Anmeldetag: 27.08.86

(51) Int. Cl.⁴: **C 22 B 7/02**
**C 22 B 1/245**

(30) Priorität: 09.09.85 LU 86070

(43) Veröffentlichungstag der Anmeldung:
08.04.87 Patentblatt 87/15

(84) Benannte Vertragsstaaten:
AT BE DE FR GB IT NL SE

(71) Anmelder: LABORLUX S.A. Société Luxembourgeoise de Laboratoires d'Analyses, d'Etudes et d'Essais de Matériaux
1, rue Henri Bessemer
L-4004 Esch-sur-Alzette(LU)

(72) Erfinder: Beckmann, Franz
Bert-Brecht-Strasse 39
D-5102 Würselen(DE)

(72) Erfinder: Schmit, Romain
Av. des Terres Rouges 16
L-4330 Esch-Sur-Alzette(LU)

(72) Erfinder: Wagner, Armand
Rue de la Tuilerie 24
L-4336 Esch-Sur-Alzette(LU)

(74) Vertreter: Neyen, René et al,
S.D.T.B. Administration Centrale de l'ARBED Case Postale 1802
L-2930 Luxembourg(LU)

(54) Verfahren zum Aufarbeiten zink- und bleihaltiger Reststoffe der Stahlindustrie im Hinblick auf eine metallurgische Weiterverarbeitung.

(57) Die Reststoffe werden in Mischung mit thermisch inerten Zusatzstoffen und mit backender Steinkohle als Bindemittel bei einer Temperatur von 490 +/− 40 °C brikettiert, wobei der Anteil an Kohlenstoff wesentlich über der für die Reduktion der Metallbestandteile erforderlichen Menge liegt. Die backende Steinkohle wird in Mengen von 20 bis 40 Gewichtsprozent in das Gemisch eingebracht und vor der Herstellung der Mischung auf eine unter ihrem Erweichungspunkt liegende Temperatur von 280 bis 360° C gebracht. Die Reststoffe werden mit eventuellen Zusätzen von Inertstoffen auf eine Temperatur von 550–700° C vorerhitzt und dann mit der vorerhitzten backenden Steinkohle gemischt. Das etwa 490° C heisse Brikettiergut wird durch Verweilen in ständiger Bewegung weitgehend entteert, in geringem Umfang entgast und anschliessend brikettiert. Bei einer weiteren Entgasung bei über 700° C wird das aus den Briketts entweichende Zink und Blei durch Kühlung vom Gas abgetrennt. Die entzinkten und entbleiten Heissbriketts können zu Reduktionszwecken in Schacht- oder Elektroöfen sowie als Aufkohlungs- bzw. Desoxydationsmittel oder als Energieträger zur Steuerung der Wärmebilanz in Konvertern oder Elektroöfen eingesetzt werden.

EP 0 217 139 A1

- 1 -

0217139

Verfahren zum Aufarbeiten zink- und bleihaltiger Reststoffe der Stahlindustrie im Hinblick auf eine metallurgische Weiterverarbeitung

Bei der Roheisen- und Stahlerzeugung fallen auf der Hochofen- und Stahlwerkseite verschiedenartige zink- und bleihaltige Reststoffe an. Hierbei handelt es sich, je nach Entstaubungsanlage, um eisenhaltige Stäube und/oder Schlämme deren Zink- und Bleigehalte von den Einsatzstoffen (Erze, Sinter, Pellet beim Hochofen, Schrott beim Stahlwerk) und auch von der Fahrweise der Anlagen abhängen. Bei den Hochofenstäuben und -schlämmen liegt allgemein der Zinkgehalt zwischen 1 und 40% und der Bleigehalt zwischen 0,2 und 10% und bei den Stahlwerksstäuben und -schlämmen der Zinkgehalt zwischen 0,2 und 5% gelegentlich auch höher und der Bleigehalt zwischen 0,1 und 2%.

Eine Rückführung dieser eisenhaltigen Stoffe ist nur begrenzt möglich, da bekanntlich Zink und in einem geringeren Masse auch Blei im Hochofen Schwierigkeiten verursachen. Demnach gelangen die nicht rezyklierbaren Stoffe auf Deponien. Da Zink und Blei aus diesen Stäuben und Schlämmen teilweise auswaschbar sind, können nur kontrollierte kostspielige Deponien benutzt werden. Durch die Deponierung dieser Stoffe gehen, neben Zink und Blei, auch erhebliche Mengen an Eisen und an Kohlenstoff verloren. Demnach kann aus ökologischen und aus wirtschaftlichen Gründen die Deponie auf Dauer keine allgemein anwendbare Lösung darstellen.

Aus diesen Gründen wurden bereits verschiedenartige Behandlungsweisen erprobt, welche es ermöglichen sollen, aus solchen Stoffen, die Bestandteile Zink und Blei abzutrennen und die Vorstoffe vorzugsweise unter weitgehender Metallisierung des Eiseninhaltes in feste Formkörper überzuführen, welche in den Stofffluss der Hüttenwerke zurückgeführt werden können.

Vornehmlich werden die Zink und Blei enthaltenden Feststoffe, die entweder von sich aus einen gewissen, zur Reduzierung der darin enthaltenen Zink- und Bleioxide ausreichenden Anteil an kohlenstoffhaltigen Reduktionsmitteln aufweisen oder welchen ein solcher Anteil an kohlenstoffhaltigen Stoffen zugesetzt wird, mit geeigneten Bindemitteln vermischt und gewöhnlich durch Pelletisieren in kleine Formkörper mit für die Behandlung ausreichender Festigkeit übergeführt. Die so erhaltenen Formkörper werden, gewöhnlich in einem Drehofen, so lange auf 1000 °C - 1200 °C erhitzt, bis die darin enthaltenen Zinkbestandteile verdampft sind. Dabei wird alles in der Ofenschüttung enthaltene Zinkoxid reduziert. Das Zinkmetall tritt als Zinkdampf in den freien Ofenraum aus und wird mit einem Gasstrom bzw. dem Abgas abgeführt. Gewöhnlich wird das Zink im freien Ofenraum oxidiert und das Zinkoxid als Flugstaub von den Gasen abgetrennt. Blei wird dabei vorwiegend als Chlorid oder Sulfid verflüchtigt.

Die bisher bekanntgewordenen Verfahren erlauben lediglich ein einigermassen wirtschaftliches Arbeiten, wenn Reststoffe mit verhältnismässig hohen Anteilen an abzutrennenden Bestandteilen eingesetzt werden können und wenn wegen der Kostendegression den Anlagen grosse Mengen Reststoffe zur kontinuierlichen Verarbeitung zur Verfügung stehen. Hinzu kommt, dass die von Schadstoffen befreiten Pellets in der Regel zu klein sind, um so weiterbenutzt werden zu können. Die Pellets müssen also brikettiert werden, um z.B. im Hochofen eingesetzt werden zu können, was insbesondere durch die Zwischenabkühlung mit einem hohen Energieverlust verbunden ist.

Diese Verfahren, sowie die ebenfalls zum Stand der Technik gehörenden Laugungsverfahren, erlauben es nicht, das ökologische Problem zufriedenstellend zu lösen, weil der grosse Anteil der Reststoffe mit einem für die wirtschaftliche Aufarbeitung ungenügenden Schadstoffgehalt nach wie vor deponiert werden muss. Auch sind insbesondere die auf thermischer Basis arbeitenden Verfahren nicht zum Einsatz auf lokaler Ebene geeignet, da sie für die Aufarbeitung von Anfallmengen bis zu ca. 100.000 t/Jahr nicht wirtschaftlich betrieben werden können. Demzufolge können auch die in diesen Reststoffen enthaltenen Kohlenstoff- und Eisenträger einer Wiederverwertung nicht zugänglich gemacht werden.

Aufgabe der vorliegenden Erfindung ist es ein Verfahren zu schaffen, welches obige Nachteile nicht aufweist und es erlaubt aus Reststoffen der Hüttenindustrie neben Zink auch den überwiegenden Anteil an Blei, sowie einen wesentlichen Prozentsatz an Alkalien zu entfernen und in ein festes und stückiges Material zu überführen, welches für die Rückführung in den Stofffluss eines Hüttenwerkes geeignet ist. In der Tat sind die nach bekannten Verfahren erhaltenen Rückstandprodukte infolge ihrer besagten Feinkörnigkeit zum direkten Einsatz im Hüttenwerk schlecht geeignet.

Diese Aufgabe wird erfindungsgemäss dadurch gelöst, dass die fein- und feinstkörnigen Zink und Blei enthaltenden oxidischen Reststoffe vorzugsweise in Mischung mit thermisch inerten Zusatzstoffen und mit backender Steinkohle bei einer Temperatur von 490 +/-40 °C heissbrikettiert werden, wobei der Anteil an Kohlenstoff wesentlich über der für die Reduktion der Metallverbindungen erforderlichen Menge liegt, und die so brikettierten Reststoffe anschliessend auf mehr als 700°C aufgeheizt und durch Verweilen in der Hitze reduziert werden.

Die Hüttenstäube fallen bekanntlich je nach Art der zum Einsatz kommenden Entstaubungssysteme trocken, feucht oder sogar mit hohem Wassergehalt an. Die Schlämme müssen vor dem Mischen mit den anderen Zusatzstoffen einer fest-flüssig Trennung unterworfen und ggf. getrocknet werden. Vorteilhafterweise werden Stäube und Schlämme untereinander vermengt und gelangen als Gemische zum Einsatz.

Der Zusatz des Kohlenstoffs erfolgt teilweise in Form von backender Kohle in feiner Körnung und in Mengen von wenigstens 20 Gewichtsprozent des Brikettiergutes. Vorzugsweise liegen die Mengen zwischen 25 und 35% und können bis zu 40% erreichen.

Wegen des Einsatzes der bei der Heissbrikettierung als Bindemittel wirkenden, backenden Steinkohle können den zu entzinkenden Stoffen noch verschiedene andere thermisch inerte feinkörnige Stoffe beigemischt werden. Auf diese Weise ist es möglich, die Zusammensetzung der nach der Entzinkung anfallenden Formlinge im Hinblick auf ihre Rezyklierung zu beeinflussen bzw. andere Nebenprodukte der Hüttenindustrie mit aufzuarbeiten. So können vornehmlich Walzenzunder, Eisenspäne oder Erze zur Erhöhung des Eisengehaltes der Formlinge mit in die Mischungen eingebracht werden. Als weitere Kohlenstoffträger ohne Bindemittelwirkung können feinkörnige, inerte Brennstoffe wie Anthrazit, Petrolkoks oder Koksgrus eingesetzt werden.

Die Herstellung des Brikettiergemisches erfolgt in der Weise, dass einerseits die Reststoffe mit eventuellen Zusätzen von Inertstoffen mit Hilfe eines Feuergases für sich auf eine Temperatur von 550-700 °C vorerhitzt werden und dass andererseits die backende Steinkohle vor der Herstellung der Endmischung bis auf eine unter ihrem Erweichungspunkt liegende Temperatur von 280-360 °C aufgeheizt wird und dass die getrennt vorgeheizten Komponente zusammengebracht und vermischt werden. Das Gemisch wird mit 490 +/- 40 °C nach genügender, jedoch noch unvollständiger Entteerung bei gleichzeitiger Knetung brikettiert. Anschliessend werden die heissen Briketts durch Verweilen im Bereich der angewendeten Brikettiertemperatur während wenigstens 30 Minuten entteert und in geringem Umfang entgast. Sie werden dann ohne Zwischenabkühlung auf eine Temperatur von über 700°C, vorzugsweise von 900 bis 1000 °C gebracht und vollständig entgast. Dies kann derart geschehen, dass die Briketts durch indirekte Beheizung, z.B. in einem gasbeheizten Schachtofen, auf die gewünschte Temperatur gebracht werden. Soweit die Briketts elektrisch leitende Bestandteile enthalten oder denselben solche zugemischt werden, kann die Entgasung auch durch direkte Beheizung in einem Induktionsschachtofen vorgenommen werden.

Bei dieser Temperaturerhöhung wird das Zinkoxid und in einem gewissen Ausmass auch das Eisenoxid in an sich bekannter Weise reduziert. Das Zink wird infolge seines hohen Dampfdruckes bei den Behandlungstemperaturen, zusammen mit Pyrolysegas und Kohlenoxid, als Metall verflüchtigt. Es wird durch Abkühlung kondensiert und abgeschieden. Da nach dem erfindungsgemässen Verfahren nicht bei Temperaturen von 1300 °C und mehr gefahren wird - Temperaturen, bei denen Blei metallisch verdampft - wird das Blei infolge seines zu niedrigen Dampfdruckes nicht als Metall verflüchtigt. Es wird vielmehr weitgehend als Bleisulfid, als Bleichlorid und in einem gewissen Masse auch als Bleioxid verflüchtigt. Das Eisen bleibt nach teilweiser oder vollständiger Metallisierung im Brikett.

Es hat sich herausgestellt, dass sich bei dem erfindungsgemässen Verfahren der beträchtliche Ueberschuss an Kohlenstoff positiv auf die Austreibung der Schadmetalle auswirkt. Die Austreibung kann desweiteren dadurch positiv beeinflusst werden, dass durch entsprechende Zusätze zu dem Gemisch ein erhöhter Basengrad $CaO+MgO/SiO_2$ der Briketts eingestellt wird, oder dass durch die Zugabe von Chloriden, vornehmlich von Calciumchlorid, auf die Verflüchtigung von Blei und Alkalien Einfluss genommen wird.

Die entzinkten und entbleiten Briketts haben gegenüber den nach anderen Verfahren erhaltenen Rückstandsprodukten in der Eisen- und Stahlindustrie den Vorteil, dass sie vom Kaliber und von der Festigkeit her direkt in Schachtöfen, Konvertern, Elektroöfen oder nach Zerkleinern in Sinteranlagen eingesetzt oder in Hochöfen eingeblasen werden können. Darüber hinaus weisen die in einem kontinuierlichen Arbeitsgang unter bester Energieausnutzung hergestellten Briketts einen solchen Kohlenstoffgehalt auf, dass sie auch als Kohlenstoffträger bzw. fester Brennstoff eingesetzt werden können. Auch die vorerwähnte Einstellung des Basizitätsgrades bringt, neben der günstigen Auswirkung auf die Austreibung der Schadmetalle, Vorteile für den Einsatz bei Reduktions- und Sinterprozessen. So können die entzinkten und entbleiten Heissbriketts als Aufkohlungs- bzw. Desoxydationsmittel und/oder als Energieträger zur Steuerung der Wärmebilanz in Konvertern und/oder Elektroöfen eingesetzt werden.

Bei dem erfindungsgemässen Verfahren kann das vorwiegend aus Pyrolysegas und CO bestehende Gas, nach Abkühlung und Entfernen von Zink und Blei, durch Abscheidung als Brennstoff für die Aufheizung der Beschickungsprodukte in die Heissbrikettierung zurückgeführt werden. Weitere Energie kann dadurch wiedergewonnen werden, dass die heissen Briketts mittels eines inerten Gasstromes abgekühlt werden.

Das Verfahren kann aber auch so gesteuert werden, dass die heissen Briketts unmittelbar nach der Heissbrikettierung auf mehr als 700 °C aufgeheizt und entgast werden und die bei dem Reduktionsvorgang entweichenden heissen Gase entweder sofort verbrannt werden, oder das darin als Metalldampf enthaltene Zink durch Oxidation mittels Wasserdampf oder Kohlendioxid (Gichtgas) selektiv zu Zinkoxid oxidiert wird, ohne dass die kondensierbaren Gasbestandteile, vornehmlich Zinkdampf vorher auskondensiert werden. Auf diese Weise kann Zink und Blei in der Oxydform aus dem Rauchgas abgetrennt werden.

Das Verfahren erlaubt es also neben der Gewinnung von Einsatzprodukten für die Zink- und Bleiindustrie, Abfallprodukte der Hüttenindustrie für deren direkte Wiederbenutzung aufzuwerten. Dabei können auch infolge der besseren Energieausnutzung bei dem vorliegenden Verfahren Reststoffe mit geringer Fremdstoffbeladung in verhältnismässig kleinen Mengen auf lokaler oder auf regionaler Basis noch wirtschaftlich verarbeitet werden, so dass eine Deponie dieser umweltgefährdenden Reststoffe entfällt.

In einer weiteren Ausgestaltung des Verfahrens werden die Heissbriketts nach ihrer Entzinkung und Entbleiung zumindest teilweise vergast. Dabei werden die eisen- und mehr oder weniger kohlenstoffhaltigen Rückstände in den Hüttenprozess zurückgeführt.

Bei der Vergasung empfiehlt es sich, als Teil des Vergasungsmittels Gichtgas zu verwenden, um mindestens einen Teil des darin enthaltenen Kohlendioxides und Wasserdampfes in Kohlenmonoxid und Wasserstoff zu überführen und dadurch den Heizwert des Gichtgases entscheidend zu erhöhen.

<u>Patentansprüche</u>

1. Verfahren zum Aufarbeiten fein- und feinstkörniger zink- und bleihaltiger oxidischer Reststoffe der Stahlindustrie im Hinblick auf eine metallurgische Weiterverarbeitung, dadurch gekennzeichnet, dass die Reststoffe in Mischung mit thermisch inerten Zusatzstoffen und mit backender Steinkohle als Bindemittel bei einer Temperatur von 490 +/- 40 °C brikettiert werden, wobei der Anteil an Kohlenstoff wesentlich über der für die Reduktion der Metallbestandteile erforderlichen Menge liegt und die so brikettierten Reststoffe anschliessend auf mehr als 700 °C aufgeheizt und durch Verweilen in der Hitze reduziert werden.

2. Verfahren nach Anspruch 1, dadurch gekennzeichnet, dass die backende Steinkohle in Mengen von 20 bis 40 Gewichtsprozent in das Gemisch eingebracht wird.

3. Verfahren nach einem der Ansprüche 1 oder 2, dadurch gekennzeichnet, dass die Reststoffe mit eventuellen Zusätzen von Inertstoffen auf eine Temperatur von 550-700° C vorerhitzt und dann mit der vorerhitzten backenden Steinkohle gemischt werden, wobei als inerte Zusatzstoffe, niederflüchtige, feinkörnige Kohlenstoffträger vornehmlich Anthrazit, Koksgrus und Petrolkoks und/oder feinkörnige eisenhaltige Stoffe, vornehmlich Eisenerze, Eisenspäne und Walzenzunder, zugesetzt werden können.

4. Verfahren nach einem der Ansprüche 1 bis 3, dadurch gekennzeichnet, dass die Austreibung der Schadmetalle begünstigende Zusätze, wie Erdalkalioxide und/oder -chloride dem Gemisch einverleibt werden.

5. Verfahren nach einem der Ansprüche 1 bis 4, dadurch gekennzeichnet, dass das 490 +/- 40° C heisse Brikettiergut durch Verweilen in ständiger Bewegung weitgehend, jedoch nicht vollständig entteert, in geringem Umfang entgast und anschliessend auf Doppelwalzenpressen brikettiert wird.

6. Verfahren nach einem der Ansprüche 1 bis 5, dadurch gekennzeichnet, dass die Briketts im Bereich der angewendeten Brikettiertemperatur, wenigstens 30 Minuten zwecks vollständiger Entteerung verweilen und anschliessend auf mehr als 700 °C aufgeheizt und dabei weiter entgast werden.

7. Verfahren nach Anspruch 6, dadurch gekennzeichnet, dass das bei der weiteren Entgasung aus den Briketts entweichende Zink und Blei durch Kühlung vom Gas abgetrennt wird, wobei insbesondere das entzinkte und entbleite Gas als Brennstoff zur Deckung des notwendigen Wärmebedarfs des Verfahrens eingesetzt wird.

8. Verfahren nach einem der Ansprüche 1 bis 5, dadurch gekennzeichnet, dass die heissen Briketts unmittelbar nach der Heissbrikettierung auf mehr als 700 °C aufgeheizt und dabei weiter entgast werden.

9. Verfahren nach den Ansprüchen 6 oder 8, dadurch gekennzeichnet, dass das entweichende Gas ohne Kondensierung der kondensierbaren Bestandteile verbrannt wird und Blei und Zink in Form ihrer Oxide aus dem Rauchgas abgetrennt werden.

10. Verfahren nach den Ansprüchen 6 oder 8, dadurch gekennzeichnet, dass das in dem entweichenden Gas als Metalldampf enthaltene Zink durch Oxidation selektiv zu Zinkoxid oxidiert wird.

11. Verfahren nach einem der Ansprüche 1 bis 10, dadurch gekennzeichnet, dass die entzinkten und entbleiten Heissbriketts einem Vergasungsprozess zugeführt werden, wobei insbesondere Hochofengas als Teil der Vergasungsmittel eingesetzt wird.

# 0217139

**Europäisches Patentamt**

## EUROPÄISCHER RECHERCHENBERICHT

Nummer der Anmeldung

EP 86 11 1885

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-3 440 037 (LABORLUX) <br> * Ansprüche 1, 5 * | 1 | C 22 B 7/02 <br> C 22 B 1/245 |
| | --- | | |
| A | EP-A-0 046 146 (VOEST-ALPINE) | | |
| | --- | | |
| A | DE-A-2 335 669 (METALLGESELLSCHAFT) | | |
| | --- | | |
| A | DE-A-3 132 766 (ARBED) | | |
| | --- | | |
| A | US-A-3 547 623 (CARPENTEUR et al.) | | |
| | ----- | | **RECHERCHIERTE SACHGEBIETE (Int. Cl.4)** |
| | | | C 22 B 1/245 <br> C 22 B 7/02 |

Der vorliegende Recherchenbericht wurde für alle Patentansprüche erstellt

| Recherchenort | Abschlußdatum der Recherche | Prüfer |
|---|---|---|
| BERLIN | 19-12-1986 | SUTOR W |